# FASCICULE DE BREVET EUROPEEN

(11) **EP 1 855 894 B1**
(45) Date de publication et mention de la délivrance du brevet: **23.01.2013**
(21) Numéro de dépôt: 06708119.0
(22) Date de dépôt: 08.02.2006
(51) Int. Cl.: B44C 1/175, B32B 5/00, B32B 27/00

(54) **PROCEDES D'APPLICATION D'UN FILM DECORATIF SUR UN SUPPORT, ET PROCEDES DE PREPARATION D'ARTICLES A CET EFFET**
VERFAHREN ZUM AUFBRINGEN EINER ZIERFOLIE AUF EINEN TRÄGER UND VERFAHREN ZUR HERSTELLUNG VON ARTIKELN FÜR DIESEN ZWECK
METHOD OF APPLYING A DECORATIVE FILM TO A SUPPORT AND METHODS OF PREPARING ARTICLES FOR SAID PURPOSE

(30) Priorité: 08.02.2005 FR 0501273
(43) Date de publication de la demande: 21.11.2007
(73) Titulaire: Garcin, Florence, 78170 La Celle Saint-Cloud (FR); Garcin, Francois, 75016 Paris (FR); Boubounelle, André, 78430 Louveciennes (FR); Chevallier, Stanislas, 78170 La Celle Saint-Cloud (FR)
(72) Inventeur: CHEVALLIER, Stanislas, 78170 La Celle Saint-Cloud (FR)
(74) Mandataire: Regimbeau
(86) Numéro de dépôt international: PCT/EP2006/050774
(87) Numéro de publication internationale: WO 2006/084865

(56) Documents cités:
- WO-A-00/05077
- US-A- 5 560 796
- US-A- 5 969 069
- US-B1- 6 277 229
- PATENT ABSTRACTS OF JAPAN vol. 018, no. 543 (M-1687), 17 octobre 1994 (1994-10-17) & JP 06 191197 A (NISHIYODO MARK SEISAKUSHO:KK), 12 juillet 1994 (1994-07-12)

## Description

La présente invention concerne d'une façon générale les techniques de transposition ou transfert de couches décoratives.

On connaît déjà de nombreuses techniques pour transposer une couche décorative, par voie sèche ou humide.

Classiquement, la voie humide est la technique du papier peint ou de la décalcomanie, tandis que la voie sèche implique l'usage d'une couche d'adhésif sensible à la pression, préservé jusqu'à utilisation par une pellicule pelable.

En général, ces techniques connues impliquent que la couche décorative elle-même soit sur un support présentant une certaine épaisseur, qui a pour effet, en général souhaité, de gommer les inégalités de la surface qui reçoit la couche décorative. En outre, ces techniques impliquent que l'aspect de la couche décorative soit définie à l'avance, en général sans possibilité de réaliser des décorations sur-mesure.

Le document US 6 277 229 décrit par exemple un procédé de transfert d'une image, dans lequel on applique successivement une couche de vernis soluble, une couche de vernins insoluble et une couche d'adhésif soluble sur un support, puis on imprime localement la face libre de la couche d'adhésif. Ce faisant, la couche d'adhésif devient localement collante, tandis que les zones non imprimées restent sèches. Il est alors possible de retirer les zones non imprimées en pelant l'empilement constitué des vernis et de l'adhésif sec, afin d'obtenir un support ne comportant plus que la zone imprimée collante.

La présente invention vise à proposer une nouvelle technique de transposition de couche décorative qui d'une part présente un résultat qui puisse s'apparenter visuellement à celui obtenu par une technique conventionnelle de peinture, et qui d'autre part puisse être mise en oeuvre de façon économique, simple et non salissante.

L'invention propose à cet effet selon un premier aspect un procédé d'application d'un film décoratif sur un support, caractérisé en ce qu'il comprend les étapes suivantes :
(a) prévoir un premier support temporaire présentant des caractéristiques de surface telles qu'une matière à peindre puisse être appliquée sous forme d'un film directement sur ledit support temporaire, tout en engendrant des forces d'adhésion limitées mais stables dans le temps entre le support temporaire et le film ;
(b) appliquer ladite matière à peindre sur ledit support pour former le film ;
(c) faire sécher le film ;
(d) appliquer sur le film un premier adhésif, désactivable à l'eau ;
(e) appliquer un second support temporaire mince à déformabilité élevée et partiellement absorbant contre le film présent sur le premier support temporaire et muni du premier adhésif, de manière à les mettre en contact sur toute leur étendue commune, ce premier adhésif étant apte à engendrer entre le film et ledit second support temporaire des forces d'adhésion supérieures à celles existant entre le film et le premier support temporaire ;
(f) après un séchage suffisant du premier adhésif, exercer une traction sur le second support temporaire de manière à peler un ensemble formé par ledit second support temporaire et ledit film de matière à peindre, retenus ensemble par ledit premier adhésif ;
(g) appliquer sur un support définitif et/ou sur la face libre du film retenu sur le second support temporaire un second adhésif ;
(h) appliquer le second support temporaire muni du film contre ledit support définitif ;
(i) après un séchage suffisant du second adhésif, peler le second support temporaire en laissant le film de matière à peindre sur le support définitif, l'activité du premier adhésif étant suffisamment basse pour autoriser ce pelage.

On entend ici par « déformabilité élevée » à propos du second support une capacité à s'éloigner facilement de son plan, mais une faible aptitude à se déformer dans son plan.

Certains aspects préférés mais non limitatifs de ce procédé sont les suivants :
* le procédé comprend en outre une étape d'ajustement de l'activité de surface du premier support temporaire par application d'un produit tensioactif.
* le premier support temporaire est une plaque de verre ou de matière synthétique ou un film souple en matière synthétique.
* la matière à peindre est une peinture acrylique.
* le second support temporaire est une toile, en particulier une toile de coton.
* l'étape (b) est mise en oeuvre à l'aide d'une machine à peindre.
* le procédé comprend en outre, entre les étapes (c) et (d), une étape consistant à réaliser une impression sur le film de matière à peindre.
* ladite étape d'impression est mise en oeuvre à l'aide d'un appareil à jet d'encre et avec une encre apte à imprégner au moins partiellement le film.
* le procédé comprend une étape spécifique d'abaissement de l'activité du premier adhésif par apport d'eau sur la face exposée du second support temporaire, opposée au film, cette eau traversant ledit second support temporaire pour atteindre le premier adhésif.

Selon un deuxième aspect, la présente invention propose un procédé d'application d'un film décoratif sur un support, caractérisé en ce qu'il comprend les étapes suivantes :
(a) prévoir un support temporaire présentant des caractéristiques de surface telles qu'une matière à peindre puisse être appliquée sous forme d'un film directement sur ledit support temporaire, tout en engendrant des forces d'adhésion limitées entre le support temporaire et le film ;
(b) appliquer ladite matière à peindre sur ledit support ;
(c) faire sécher le film ;
(d) appliquer sur un support définitif et/ou sur la face libre du film un adhésif apte à engendrer entre le film et le support définitif des forces d'adhésion supérieures à celles existant entre le film et le support temporaire ;
(e) appliquer le support temporaire muni du film contre ledit support ; et
(f) après un séchage suffisant dudit adhésif, peler le support temporaire en laissant le film de matière à peindre sur le support définitif.

Certains aspects préférés mais non limitatifs de ce procédé sont les suivantes :
* le procédé comprend en outre une étape d'ajustement de l'activité de surface du support temporaire par application d'un produit tensioactif.
* le support temporaire est une feuille souple en matière synthétique.
* la matière à peindre est une peinture acrylique.
* l'étape (b) est mise en oeuvre à l'aide d'une machine à peindre.
* le procédé comprend en outre, entre les étapes (c) et (d), une étape consistant à réaliser une impression sur le film de matière à peindre.
* ladite étape d'impression est mise en oeuvre à l'aide d'un appareil à jet d'encre et avec une encre apte à imprégner au moins partiellement le film.
* la matière à peindre est peu ou non chargée en pigments.

Selon un troisième aspect de l'invention, on propose un procédé de fabrication d'un article permettant notamment l'apposition d'un film décoratif sur un support, caractérisé en ce qu'il comprend les étapes suivantes :
(a) prévoir un premier support temporaire présentant des caractéristiques de surface telles qu'une matière à peindre puisse être appliquée sous forme d'un film directement sur ledit support temporaire, tout en engendrant des forces d'adhésion limitées entre le support temporaire et le film ;
(b) appliquer ladite matière à peindre sur ledit support pour former le film ;
(c) faire sécher le film ;
(d) appliquer sur le film un premier adhésif, désactivable à l'eau ;
(e) appliquer un second support temporaire mince à déformabilité élevée et partiellement absorbant contre le film présent sur le premier support temporaire et muni du premier adhésif, de manière à les mettre en contact sur toute leur étendue commune, ce premier adhésif étant apte à engendrer entre le film et ledit second support temporaire des forces d'adhésion supérieures à celles existant entre le film et le premier support temporaire ; et
(f) après un séchage suffisant du premier adhésif, exercer une traction sur le second support temporaire de manière à peler un ensemble formé par ledit second support temporaire et ledit film de matière à peindre, retenus ensemble par ledit adhésif.

On entend ici encore par « déformabilité élevée » à propos du second support une capacité à s'éloigner facilement de son plan, mais une faible aptitude à se déformer dans son plan.

On propose en outre un procédé de fabrication d'un article permettant notamment l'apposition d'un film décoratif sur un support, caractérisé en ce qu'il comprend les étapes suivantes :
(a) prévoir un support temporaire présentant des caractéristiques de surface telles qu'une matière à peindre puisse être appliquée sous forme d'un film directement sur ledit support temporaire, tout en engendrant des forces d'adhésion limitées entre le support temporaire et le film ;
(b) appliquer ladite matière à peindre sur ledit support ; et
(c) faire sécher le film.

Selon un autre aspect encore, on prévoit selon l'invention un article pour l'apposition d'un film décoratif sur un support, préparé notamment par un procédé tel que défini ci-dessus, caractérisé en ce qu'il se présente sous la forme d'un lé comportant une zone principale avec un film de matière peinte contenant des pigments et deux zones de bordure de largeur essentiellement constante avec une densité de pigments réduite et/ou une épaisseur de produit à peindre réduite par rapport à la zone principale.

Enfin on prévoit un procédé de préparation d'un article permettant la transposition d'une décoration réalisée par machine d'impression sur un support, caractérisé en ce qu'il comprend les étapes consistant à :
(a) appliquer directement sur un support un film de matière à peindre, ladite feuille étant choisie pour pouvoir passer dans une machine d'impression; et
(b) imprimer directement le film sec de matière à peindre retenu sur le support dans ladite machine d'impression.

Avantageusement, le support est choisi parmi les feuilles souples en matière synthétique et les toiles.

Selon une autre préférence, le support est une feuille souple revêtue d'un adhésif protégé par une pellicule pelable.

D'autres aspects, buts et avantages de la présente invention apparaîtront mieux à la lecture de la description détaillée suivante des formes de réalisation préférée de celle-ci, donnée à titre d'exemple non limitatif et faite en référence aux dessins annexés, sur lesquels :
Les figures 1A à 1F illustrent différentes étapes d'un procédé de transposition de couche décorative selon un premier mode de réalisation de l'invention,
Les figures 2A à 2C illustrent différentes étapes d'un procédé de transposition de couche décorative selon un deuxième mode de réalisation de l'invention,
La figure 3 est une vue de face d'un lé réalisé selon une variante de réalisation de l'invention,
La figure 4 est une vue en coupe de la région où se rejoignent deux lés adjacents réalisés chacun selon la figure 3, et
La figure 5 est une vue en coupe de la région où se rejoignent deux lés adjacents réalisés chacun selon la figure 3, dans une variante de mise en oeuvre.

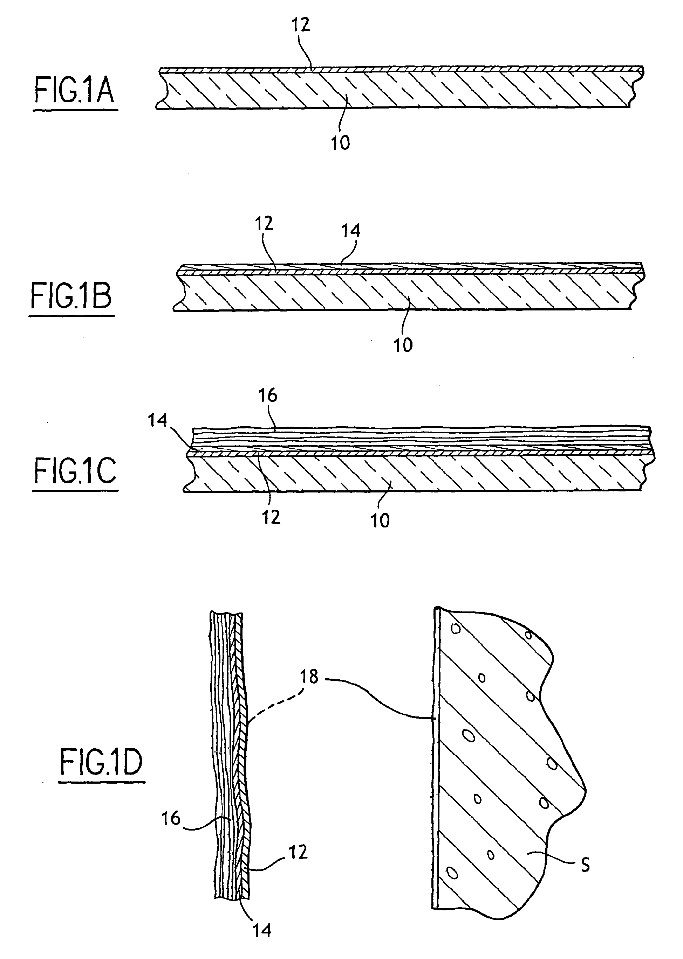

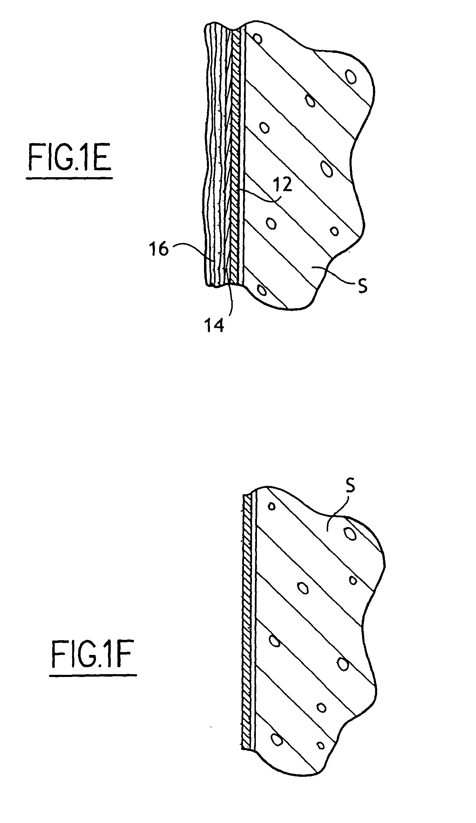

En référence tout d'abord aux figures 1A à 1F, on va décrire un procédé selon un premier mode de réalisation de l'invention.

On prévoit tout d'abord un premier support temporaire 10 lisse et présentant des propriétés de faible adhérence. Ce support peut être rigide ou souple. Par exemple, il s'agit d'une plaque de verre ou d'une feuille de matière synthétique (PVC, polycarbonate, polyamide, etc.).

L'activité de surface de ce support temporaire est déterminée de telle sorte qu'une peinture puisse être appliquée sur une face de celui-ci. Si nécessaire, cette préparation de surface peut être réalisée simplement en nettoyant la surface avec un produit tensioactif.

On applique ensuite sur cette surface une ou plusieurs couches 12 d'un produit à peindre (figure 1A). Typiquement, ce produit à peindre est une peinture du commerce, de préférence une peinture à solvant aqueux telle qu'une peinture acrylique. De façon classique en soi, lors de l'application en plusieurs couches, on attend un séchage suffisant de la couche appliquée avant d'appliquer la couche suivante.

On peut choisir tout mode d'application approprié et notamment à la brosse, au rouleau ou au pistolet.

De préférence, dans le cas d'une peinture acrylique uniforme, l'épaisseur moyenne du film de peinture réalisé est compris entre environ 5 et 20 µm (à sec)

On peut toutefois dans certains cas multiplier les couches de peinture pour atteindre des épaisseurs bien supérieures, par exemple autour de 100 µm, notamment dans le cas où l'on souhaite atténuer les irrégularités du support définitif.

Le séchage complet du film de peinture 12 ainsi réalisé est achevé soit naturellement, soit par apport de chaleur dans un four, sous une rampe infrarouge, etc.

L'étape suivante (figure 1B) consiste à appliquer sur la face libre du film de peinture 12 une mince couche 14 d'un adhésif à l'état liquide ou visqueux, soluble à l'eau. On peut choisir notamment un adhésif naturel (à base d'amidon, de gomme arabique, etc.) ou synthétique (colle à base de méthyl-cellulose, etc.).

On a également observé en faisant des essais qu'une colle en principe non soluble à l'eau après séchage, et en particulier une colle vinylique, pouvait tout à fait bien convenir comme on va le voir dans la suite.

Avant séchage de cette colle 14, on applique sur la face libre de l'ensemble ainsi formé, côté colle 14, un second support temporaire 16 (figure 1C). Ce support temporaire est choisi pour absorber partiellement le couche de colle 14 et pour présenter une déformabilité élevée. Typiquement, on choisit pour ce support une toile de coton ou synthétique, ou encore un matériau non tissé.

A titre indicatif, on peut utiliser une toile de coton d'un grammage de l'ordre de 100 g/m².

Ce second support 16 est pressé sur le support 10 pourvu du film de peinture 12 et de la couche de colle 14 sur toute son étendue, de façon à obtenir une liaison mécanique entre les fibres du tissu et la colle.

Au plus tôt après un temps d'attente de quelques minutes à quelques dizaines de minutes (durée à ajuster en particulier selon la teneur en eau de la colle), on exerce sur le tissu 16, en commençant par un bord, une traction en s'éloignant du plan de la plaque 10, et l'on observe alors un décollement entre le film de peinture 12 et ladite plaque 10, dont les forces d'adhésion se trouvent très inférieures à celles existant entre ledit film 12 et le tissu 16 par l'intermédiaire de la couche de colle 14. Ce décollement s'effectue de façon parfaitement continue et sans détérioration de la couche de peinture et après achèvement de cette opération, on obtient un ensemble constitué par le tissu support 16, la couche de colle 14 et le film de peinture, non altéré (absence de fissures, craquelures ou de zones où la peinture est manquante).

Le demandeur a observé par ailleurs que la température pouvait avoir une influence sur l'opération de décollement décrite ci-dessus. En particulier, dans le cas où le support 10 est un film souple en matière synthétique, un chauffage de celui-ci jusqu'à une gamme de températures de préférence de l'ordre de 70 à 90°C facilite la qualité du décollement. Cette application de chaleur peut s'effectuer par exemple avec une source d'air chaud pulsé balayant le dos du support 10.

L'ensemble obtenu après décollement est illustré en partie gauche de la figure 1D. Ce produit peut être préparé par exemple en lés pour commercialisation et pose par le particulier ou le professionnel.

On va maintenant décrire l'opération de pose en référence aux figures 1D à 1F.

Tout d'abord, un adhésif sous forme liquide ou visqueuse, et de préférence une colle naturelle à base d'amidon hydrosoluble, une colle à base de méthyl-cellulose, une colle vinylique (par exemple du type Flexicolle - marque déposée) ou une colle acrylique ou encore du liant de peinture (par exemple de type Bindex ou Caparol - marques déposées) ou du vernis mat (par exemple vernis acrylique du type Polyvine - marque déposée), est appliquée soit sur la face à décorer d'un support définitif S, soit sur la face libre du film de peinture 12, soit encore sur les deux.

Le lé est alors appliqué contre le support S. Un marouflage à la brosse ou avec tout autre instrument peut le cas échéant être réalisé pour assurer la mise en contact uniforme du film de peinture et du support S sur toute l'étendue du lé (figure 1E).

Après séchage de la colle (variable selon la nature de la colle utilisée), on humidifie la face exposée (dos) du tissu support 16 par apport d'eau à l'aide par exemple d'une éponge. Ceci a pour effet de dissoudre la colle 14 qui lie le tissu 16 au film de peinture 12 par l'eau qui a traversé le tissu.

On exerce alors progressivement une traction, dans des directions variables mais qui restent voisines de son plan, sur le tissu 16, pour séparer complètement celui-ci du film de peinture, qui reste fixé sur le support S.

Le tissu 16 peut alors être jeté, ou recyclé.

On obtient ainsi, sur le support S, un film de peinture dont l'aspect est très voisin de celui d'une peinture effectuée traditionnellement.

La dernière étape consiste à éliminer, par exemple à l'aide d'une éponge, les traces de la couche de colle 14 subsistant sur le film de peinture 12.

A propos de l'utilisation d'une colle vinylique, on a constaté de façon inattendue que l'on pouvait aboutir à un résultat très satisfaisant avec ce type de colle, dans la mesure où l'application d'eau au dos du tissu 16 permet de diminuer son pouvoir adhésif jusqu'à autoriser le décollement du film par rapport au tissu, et également dans la mesure où les traces de colle subsistant sur le film 12 une fois fixé au support définitif S peuvent s'enlever très facilement avec une éponge humide.

On observera ici que, selon la nature de la colle utilisée, l'étape d'abaissement d'activité par apport d'eau peut ne pas être nécessaire. En particulier, il s'est avéré que certaines sollicitations mécaniques exercées sur l'ensemble tissu/film de peinture (par exemple lors d'une mise en rouleau et/ou lors d'un marouflage effectué lors de l'application sur le support définitif) réalisaient un abaissement suffisant de l'activité de cette colle. Il est également possible qu'un apport d'eau effectue non pas une dissolution de la colle, mais un gonflement du tissu qui abaisse l'activité de la colle ici encore de façon mécanique.

On notera ici qu'en jouant sur la nature du matériau à peindre et sur l'épaisseur de la ou des couches réalisées, on peut à loisir laisser la structure du support apparente (par exemple peinture sur bois) ou au contraire obtenir un rendu plus lisse, où les irrégularités du support sont gommées dans une certaine mesure.

En outre, la déformabilité importante du support tissé 16 permet d'appliquer le film de peinture sur des surfaces courbes, anguleuses, etc. (par exemple des moulures, des corniches, etc.) de par son aptitude à épouser ce genre de surface.

Le procédé décrit selon l'invention peut être utilisé pour appliquer des couches décoratives unies, ou à motifs, des oeuvres multicolores, etc.). L'application de peinture peut être faite soit manuellement (cas notamment d'une oeuvre originale), soit à l'aide d'une machine à peindre du commerce.

A cet égard, le résultat obtenu sur le support final S est identique à ce qui a été réalisé sur le support primaire 10, y compris pour ce qui concerne les éventuels reliefs (surcroîts de matière, etc.) recherchés lors de cette réalisation. On peut ainsi utiliser le procédé pour réaliser toutes peintures originales, fresques, etc., celles-ci étant d'abord réalisées sur le support primaire 10 puis transposées, à l'identique, sur le support définitif.

On notera par ailleurs que le produit nouveau constitué par le tissu 16 sur lequel le film de peinture 12 adhère via la couche d'adhésif 14 présente un aspect propre original et peut être utilisé dans d'autres buts que la décoration de surfaces, et notamment dans le domaine de l'habillement (vêtements), de la décoration intérieure (nappes, rideaux, ...), etc. Si nécessaire, on adapte la nature de l'adhésif 14 utilisé pour obtenir les qualités de solidité et de résistance recherchées.

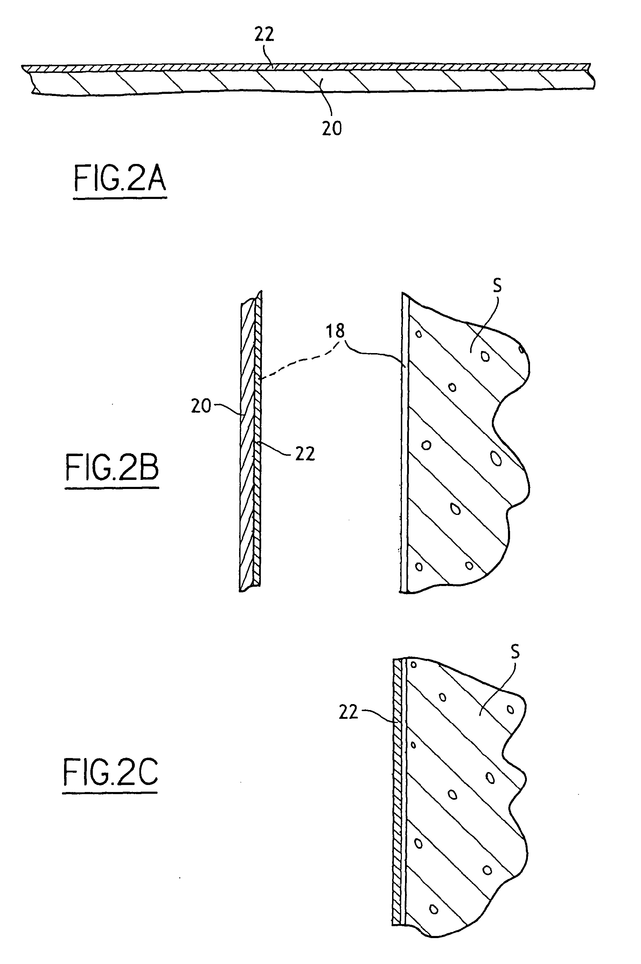

On va maintenant décrire en référence aux figures 2A à 2D un second mode de réalisation de l'invention.

Selon celui-ci, on applique une ou plusieurs couches de peinture 22 sur un support 20 intermédiaire constitué par une feuille souple à adhérence réduite, typiquement en matière synthétique.

Ce support 20 est suffisamment souple pour pouvoir être, après application, mis en rouleau. Typiquement, on utilise une feuille de PVC d'une épaisseur de préférence comprise entre environ 50 et 300 µm.

Si nécessaire, et de la même manière que dans la forme de réalisation précédente, on active de façon contrôlée la surface du support 20 à l'aide d'un agent tensioactif de manière à pouvoir y appliquer le matériau à peindre.

Ce dernier est ici encore, de préférence, à base de résines acryliques et l'on utilise toute technique d'application désirée et le nombre de couches souhaité. Comme précédemment, il peut s'agir d'une application unie, ou avec des motifs, ou encore d'une oeuvre artistique.

Ce second mode de réalisation permet d'obtenir directement le produit commercial, avec toutefois des contraintes supérieures en matière d'application puisque le support 20 doit être suffisamment solide pour pouvoir recevoir une application de peinture sans compromettre sa stabilité dimensionnelle, et donc être moins disposé que le tissu 16 de la forme de réalisation précédente à épouser les éventuelles courbures, ruptures de pentes ou encore aspérités ou reliefs, du support final S.

La pose de lés obtenus comme ci-dessus est illustrée sur les figures 2B et 2C. Une colle naturelle ou synthétique 18 est appliquée sur le support S et/ou sur la face libre du film de peinture 22 adhérant à son support 20, et le lé est ensuite appliqué fermement contre ledit support de manière à réaliser une mise en contact complète du film 22 avec celui-ci.

Après séchage de la couche de colle 18, le support 20 est délicatement détaché, le film de peinture restant sur le support grâce à l'adhésion sensiblement plus forte sur celui-ci réalisée à l'aide de ladite colle.

Le support 20 peut être facilement recyclé.

On observera ici que ce second procédé réalise une transposition à l'inverse, et qu'il est nécessaire d'en tenir compte dans le cas où des oeuvres à caractère artistique ou signifiant (signes, ...) sont réalisées sur le support 20.

On notera ici que, tant dans le premier que dans le deuxième mode de réalisation, les étapes de préparation des lés avant transposition peuvent être mises en oeuvre de façon manuelle ou automatisée sur une chaîne de fabrication à grande échelle.

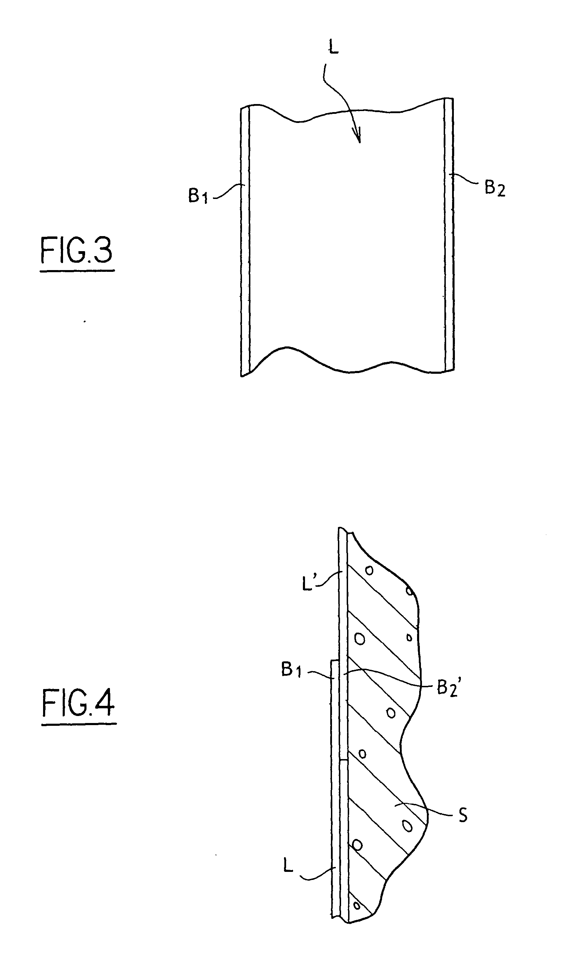

On va maintenant décrire en référence aux figures 3 et 4 une amélioration de la présente invention dans le cas où elle est mise en oeuvre sous forme de lés unis ou sensiblement unis à poser côte-à-côte (de façon analogue à la pose du papier peint).

En effet se pose dans ce cas le problème du raccord entre deux lés adjacents, qui demande un soin particulier.

Pour diminuer les effets visuels inesthétiques dans le cas où le raccord entre deux lés n'est pas parfait, on prévoit selon cette amélioration de réaliser chaque lé L en prévoyant deux zones de bordure B1 et B2 dites bandes de réduction, où la quantité ou densité de peinture est réduite et préférentiellement sensiblement divisée par deux. Ceci est obtenu par exemple :
- en appliquant dans ces zones de bordure une ou plusieurs couches de peinture de moins que dans la zone centrale principale du lé (par exemple deux couches au lieu de quatre) ;
- ou en appliquant dans ces zones une peinture moins riche en pigments que dans la zone centrale ;
- ou encore une combinaison de ces deux approches.

Ces bandes B1 et B2 ont de préférence une largeur comprise entre environ 3 et 15 mm, et plus préférentiellement entre 5 et 7 mm.

De la sorte, lors de la pose de deux lés, et en assurant un recouvrement aussi bon que possible entre la zone de bordure B1 de l'un des lés et la zone de bordure adjacente B2' de l'autre lé L', on atténue les effets visuels liés à un décalage entre les lés, puisque dans tous les cas le support (souvent de couleur très claire ou blanc) n'apparaîtra pas, et que les différences en termes d'intensité de couleur dans cette région seront atténuées.

En variante, on peut aussi prévoir que la quantité ou densité de peinture diminue progressivement à partir de la zone centrale principale du lé lorsque l'on arrive dans ses deux zones de bordure B1 et B2.

Dans tous les cas, il peut être avantageux que le support temporaire sur lequel est retenu le film avant application sur le support définitif soit pourvu de bandes support marginales séparables au niveau des zones de bordure B1 et B2. Dans un tel cas, on peut poser un premier lé, retirer la bande support marginale située d'un côté pour dégager la zone de bordure correspondante, poser le lé suivant avec le recouvrement souhaité entre zones de bordure adjacentes, et ainsi de suite, et les parties principales des supports temporaires sont ensuite toutes retirées en même temps par humidification et dissolution de l'adhésif.

Selon une autre variante, les supports temporaires peuvent être pourvus de tous repères ou marquages permettant de poser les lés adjacents avec le recouvrement désiré.

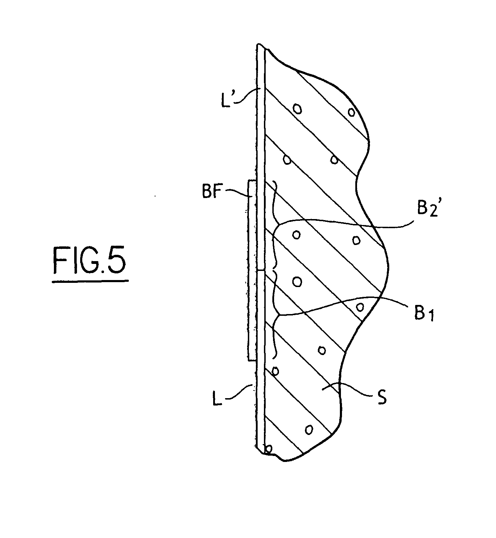

Selon une autre variante encore, et en référence à la figure 5, on peut prévoir de coller des lés avec zones de bordure telles que décrites plus haut non pas avec recouvrement mais bord à bord. Ensuite, on rapporte en chevauchement de chaque paire de lés adjacents une bande de finition BF, de préférence selon le procédé d'application même de la présente invention, dont la largeur est sensiblement égale au cumul des largeurs des deux zones de bordure adjacentes B1 et B2'. Cette bande BF possède sensiblement la même quantité ou densité de matière à peindre que les zones de bordure B1 et B2' si bien qu'après application de celle-ci, la perception visuelle de la transition entre deux lés est très sensiblement atténuée.

On va maintenant décrire une autre amélioration des procédés selon la présente invention, visant à appliquer sur un support des films décoratifs pouvant avoir tout aspect souhaité en exploitant les techniques modernes d'impression numérique.

Plus précisément, selon cette amélioration, le film de matière à peindre sert de support à une impression, typiquement une impression à jet d'encre ou à bulles d'encres, qui peut être réalisée avec une imprimante ou traceur conventionnel.

Avantageusement, les encres et la matière à peindre utilisées sont telles que lesdites encres imprègnent ladite matière à peindre qui, après séchage, reçoit une telle impression. Cette imprégnation peut être plus ou moins prononcée en fonction de l'application.

On réalise ainsi une impression qui peut être très fine et selon tous motifs stockés dans une station informatique, et en même temps très résistante grâce au phénomène d'imprégnation précité.

Dans un exemple préféré, on a réalise l'impression avec une imprimante à jets d'encre à têtes piézo-électriques utilisant des encres à solvant. Par exemple, on peut utiliser une imprimante pour supports de grandes dimensions modèle Seiko ColorPainter 64S. La peinture est de préférence une peinture acrylique.

Dans le cas du procédé selon le premier mode de réalisation de l'invention (transposition à l'identique), on réalise l'impression sur le film de peinture 12 préalablement appliqué sur le premier support temporaire 10, et l'on choisit alors pour celui-ci une feuille souple suffisamment mince (par exemple une feuille de PVC de l'ordre de 100 µm d'épaisseur.

En variante, on peut utiliser une matière à peindre incolore (translucide) ou une peinture teintée, en fonction de l'effet visuel recherché.

Les étapes suivantes du procédé sont ensuite mises en oeuvre, après un temps d'attente suffisant pour que l'encre d'impression ait séché.

On observera ici que, dans une mesure compatible avec l'équipement d'impression utilisé, on peut donner au film 12 qui reçoit ladite impression une épaisseur non uniforme, pour effectuer un rendu avec un certain relief.

Dans le cas du procédé selon le second mode de réalisation de l'invention, on réalise l'impression sur la face du film 22 de peinture qui sera appliquée contre le support final S. Il est donc nécessaire, pour que l'impression soit visible après application, d'utiliser une matière à peindre transparente, ou en tout cas très peu chargée en pigments. En outre, du fait que le report s'effectue avec inversion de ce qui est réalisé sur le support primaire 20, l'impression est effectuée avec une inversion correspondante.

On va maintenant décrire un autre aspect de l'invention visant à appliquer sur des supports variés une impression d'excellente qualité en utilisant les techniques modernes d'impression précitées.

Plus précisément, cet aspect de l'invention se fonde sur le fait qu'un film de matière à peindre, de préférence réalisé avec de la peinture acrylique, s'avère constituer un excellent support pour de telles impressions par opposition à certains supports souples traditionnels disponibles dans le commerce.

Comme on l'a indiqué plus haut, on peut ici encore choisir les encres et la matière à peindre de manière à conrôler le degré d'imprégnation du film de matière à peindre avec les encres et le rendu global, avec pour résultat une impression qui peut être très fine et très résistante grâce au phénomène d'imprégnation précité.

Dans un exemple préféré, on a réalise l'impression avec une imprimante à jets d'encre Seiko ColorPainter 64S ou 100S.

Le film de peinture acrylique peut être appliqué sur un support dont la nature peut être extrêmement variée : feuille souple en matière synthétique, toile imprégnée ou non (par exemple toile de lin à fixer ultérieurement sur châssis), la contrainte essentielle étant que ce support puisse être accepté par l'appareil d'impression.

La matière à peindre sera blanche si l'on souhaite respecter au mieux les couleurs de l'impression, ou incolore (translucide) ou teintée, en fonction de l'effet visuel recherché.

Ici encore, on peut donner au film qui reçoit ladite impression une épaisseur non uniforme, pour effectuer un rendu avec un certain relief.

Le produit constitué de la couche support et du film de peinture sur lequel l'impression a été réalisé peut être utilisé tel quel de différentes manières, et par exemple fixé dans son ensemble sur tout support définitif. A cet effet, la couche support peut être revêtue du côté opposé au film de peinture d'un adhésif protégé temporairement par une pellicule pelable, pour la fixation aisée de l'ensemble.

Dans ses premiers aspects, l'invention étend les possibilités d'application de films décoratifs, en utilisation aussi bien industrielle que domestique. La peinture étant transférée à sec, les problèmes d'odeurs, de coulures et d'applications non uniformes sont résolus, y compris sur des surfaces non planes (corniches, moulures, réchampis, etc.) Aucun temps d'attente de séchage de peinture n'est requis. Pas d'émanation de glycol (santé...).

Dans son dernier aspect, elle étend les possibilités d'utilisation des techniques d'impression numériques modernes par exemple à jet d'encre.

## Revendications

1. Procédé de fabrication d'un article permettant notamment l'apposition d'un film décoratif sur un support, comprenent les étapes:
(a) prévoir un premier support temporaire présentant des caractéristiques de surface telles qu'une matière à peindre puisse être appliquée sous forme d'un film directement sur ledit support temporaire, tout en engendrant des forces d'adhésion limitées entre le support temporaire et le film ;
(b) appliquer ladite matière à peindre sur ledit support pour former le film ; et **caractérisé en ce qu'**il comprend les étapes suivantes et
(c) faire sécher le film ;
(d) appliquer sur le film un premier adhésif, désactivable à l'eau ;
(e) appliquer un second support temporaire mince à déformabilité élevée et partiellement absorbant contre le film présent sur le premier support temporaire et muni du premier adhésif, de manière à les mettre en contact sur toute leur étendue commune, ce premier adhésif étant apte à engendrer entre le film et ledit second support temporaire des forces d'adhésion supérieures à celles existant entre le film et le premier support temporaire ; et
(f) après un séchage suffisant du premier adhésif, exercer une traction sur le second support temporaire de manière à peler un ensemble formé par ledit second support temporaire et ledit film de matière à peindre, retenus ensemble par ledit premier adhésif.

2. Procédé selon la revendication 1, d'application d'un film décoratif sur un support, **caractérisé en ce qu'**il comprend en outre les étapes suivantes :
(g) appliquer sur un support définitif et/ou sur la face libre du film retenu sur le second support temporaire un second adhésif ;
(h) appliquer le second support temporaire muni du film contre ledit support définitif ;
(i) après un séchage suffisant du second adhésif, peler le second support temporaire en laissant le film de matière à peindre sur le support définitif, l'activité du premier adhésif étant suffisamment basse pour autoriser ce pelage.

3. Procédé selon la revendication 2, **caractérisé en ce qu'**il comprend une étape spécifique d'abaissement de l'activité du premier adhésif par apport d'eau sur la face exposée du second support temporaire, opposée au film, cette eau traversant ledit second support temporaire pour atteindre le premier adhésif.

4. Procédé selon la revendication 1, **caractérisé en ce qu'**il comprend en outre une étape d'ajustement de l'activité de surface du premier support temporaire par application d'un produit tensioactif.

5. Procédé selon l'une des revendications 1 à 4, **caractérisé en ce que** le premier support temporaire est une plaque de verre ou de matière synthétique ou un film souple en matière synthétique.

6. Procédé selon l'une des revendications 1 à 5, **caractérisé en ce que** la matière à peindre est une peinture acrylique.

7. Procédé selon l'une des revendications 1 à 6, **caractérisé en ce que** le second support temporaire est une toile, en particulier une toile de coton.

8. Procédé selon l'une des revendications 1 à 7, **caractérisé en ce que** l'étape (b) est mise en oeuvre à l'aide d'une machine à peindre.

9. Procédé selon l'une des revendications 1 à 8, **caractérisé en ce qu'**il comprend en outre, entre les étapes (c) et (d), une étape consistant à réaliser une impression sur le film de matière à peindre.

10. Procédé selon la revendication 9, **caractérisé en ce que** ladite étape d'impression est mise en oeuvre à l'aide d'un appareil à jet d'encre et avec une encre apte à imprégner au moins partiellement le film.

## Claims

1. Manufacturing method for an article allowing in particular the application of a decorative film onto a substrate, comprising the steps consisting of:
(a) providing a first temporary substrate having surface characteristics such that a painting material can be applied in the form of a film directly onto said temporary substrate, while generating limited adhesion forces between the temporary substrate and the film;
(b) applying said a painting material onto said substrate to form the film; and **characterized in that** it includes the following steps; and **characterized in that** it comprises the following steps:
(c) drying the film;
(d) applying to the film a first adhesive which can be deactivated with water;
(e) applying a second temporary, thin, highly deformable and partially absorbent substrate against the film present on the first temporary substrate and provided with the first adhesive, so as to put them in contact over their entire common extent, this first adhesive being capable of generating between the film and said second temporary substrate greater adhesion forces than those existing between the film and the first temporary substrate; and
(f) after sufficient drying of the first adhesive, pulling on the second temporary substrate so as to peel away an assembly consisting of said second temporary substrate and said film of a painting material, held together by said first adhesive.

2. The method according to Claim 1, for applying a decorative film onto a substrate, **characterized in that** it also comprises the following steps:
(g) applying a second adhesive to a final substrate and/or to the free surface of the film held on the second temporary substrate;
(h) applying the second temporary substrate provided with the film against said final substrate;
(i) after sufficient drying of the second adhesive, peeling the second temporary substrate, leaving the film of a painting material on the final substrate, the activity of the first adhesive being sufficiently low to allow the peeling.

3. The method according to Claim 2, **characterized in that** it includes a specific step consisting of lowering the activity of the first adhesive by applying water to the exposed face of the second temporary substrate, opposite to the film, said water passing through said second temporary substrate to reach the first adhesive.

4. The method according to Claim 1, **characterized in that** it also includes a step consisting of adjusting the activity of the surface of the first temporary substrate by application of a surfactant.

5. The method according to one of Claims 1 through 4, **characterized in that** the first temporary substrate is a glass or plastic plate or a flexible plastic film.

6. The method according to one of Claims 1 through 5, **characterized in that** the a painting material is an acrylic paint.

7. The method according to one of Claims 1 to 6, **characterized in that** the second temporary substrate is a fabric, particularly a cotton fabric.

8. The method according to one of Claims 1 to 7, **characterized in that** step (b) is implemented using a painting machine.

9. The method according to one of Claims 1 to 8, **characterized in that** it also includes, between steps (c) and (d), a step consisting of printing onto the film of a painting material.

10. The method according to Claim 9, **characterized in that** said printing step is implemented using an inkjet device and with an ink capable of at least partially impregnating the film.

## Patentansprüche

1. Verfahren zum Herstellern eines Artikels, das insbesondere das Aufbringen eines Zierfilms auf einen Träger gestattet und das die folgenden Schritte umfasst:
(a) Vorsehen eines ersten temporären Trägers, der solche Oberflächeneigenschaften hat, dass ein Material zum Bemalen in Form eines Films direkt auf den temporären Träger aufgebracht werden kann, wobei zwischen dem temporären Träger und dem Film begrenzte Adhäsionskräfte erzeugt werden;
(b) Aufbringen des Materials zum I3emalen auf den Träger, um den Film zu bilden;
und **dadurch gekennzeichnet ist, dass** es die folgenden Schritte umfasst:
(c) Trocknen Lassen des Films;
(d) Aufbringen eines ersten Klebstoffs auf den Film, der durch Wasser deaktivierbar ist;
(e) Aufbringen eines dünnen zweiten temporären Trägers, mit hoher Verformbarkeit und zum Teil absorbierend, auf den Film, der sich auf dem ersten temporären Träger befindet und der mit dem ersten Klebstoff ausgestattet ist, und dies derart, dass diese über ihre gesamte gemeinsame Fläche in Kontakt gebracht werden, wobei der erste Klebstoff dafür eingerichtet ist, zwischen dem Film und dem zweiten temporären Träger Adhäsionskräfte zu erzeugen, die größer als diejenigen sind, die zwischen dem Film und dem ersten temporären Träger auftreten:
(f) nach einer ausreichenden Trocknung des ersten Klebstoffs, Ausüben einer Zugkraft auf den zweiten temporären Träger derart, dass eine Einheit abgeschält wird, die aus dem zweiten temporären Träger und dem Film aus dem Material zum Bemalen gebildet wird, die durch den ersten Klebstoff zusammengehalten werden.

2. Verfahren nach Anspruch 1 zum Aufbringen eines Zierfilms auf einen Träger, **dadurch gekennzeichnet, dass** es außerdem die folgenden Schritte umfasst:
(g) Aufbringen eines zweiten Klebstoffs auf einen endgültigen Träger und/oder auf die freie Seite des Films, der auf dem zweiten temporären Träger festgehalten wird;
(h) Drücken des zweiten temporären Trägers, der mit dem Film ausgestattet ist, gegen den endgültigen Träger;
(i) nach einer ausreichenden Trocknung des zweiten Klebstoffs, Abschälen des zweiten temporären Trägers, wobei der Film aus dem Material zum Bemalen auf dem endgültigen Träger zurückgelassen wird und wobei die Stärke des ersten Klebstoffs gering genug ist, damit das Abschälen möglich ist.

3. Verfahren nach Anspruch 2, **dadurch gekennzeichnet, dass** es einen speziellen Schritt zum Abschwächen der Stärke des ersten Klebers durch das Zuführen von Wasser auf die exponierte Seite des zweiten temporären Trägers, die entgegengesetzt zum Film liegt, umfasst, wobei das Wasser den zweiten temporären Träger durchdringt, um den ersten Klebstoff zu erreichen.

4. Verfahren nach Anspruch 1, **dadurch gekennzeichnet, dass** es außerdem einen Schritt zum Einstellen der Aktivität der Oberfläche des ersten temporären Trägers durch die Anwendung eines oberflächenaktiven Produktes umfasst.

5. Verfahren nach einem der Ansprüche 1 bis 4, **dadurch gekennzeichnet, dass** der erste temporäre Träger eine Platte aus Glas oder aus einem Kunststoffmaterial oder eine biegsame Folie aus einem Kunststoffmaterial ist.

6. Verfahren nach einem der Ansprüche 1 bis 5, **dadurch gekennzeichnet, dass** das Material zum Bemalen eine Acrylfarbe ist.

7. Verfahren nach einem der Ansprüche 1 bis 6, **dadurch gekennzeichnet, dass** der zweite temporäre Träger ein Tuch und insbesondere ein Baumwolltuch ist.

8. Verfahren nach einem der Ansprüche 1 bis 7, **dadurch gekennzeichnet, dass** der Schritt (b) mittels einer Maschine zum Bemalen ausgeführt wird.

9. Verfahren nach einem der Ansprüche 1 bis 8, **dadurch gekennzeichnet, dass** es zwischen den Schritten (c) und (d) außerdem einen Schritt umfasst, der darin besteht, auf dem Film aus dem Material zum Bemalen einen Druck auszuführen.

10. Verfahren nach Anspruch 9, **dadurch gekennzeichnet, dass** der Schritt zum Drucken mittels eines Tintenstrahl-Apparats ausgeführt wird, sowie mit einer Tinte, die dafür eingerichtet ist, den Film wenigstens teilweise zu imprägnieren.
